# EUROPEAN PATENT SPECIFICATION

(11) **EP 2 653 250 B1**
(45) Date of publication and mention of the grant of the patent: **16.01.2019**
(21) Application number: 13164234.0
(22) Date of filing: 18.04.2013
(51) Int. Cl.: B23D 45/06, B23D 47/08

(54) **Sawing unit for wood**
Sägeeinheit für Holz
Unité de sciage de bois

(30) Priority: 18.04.2012 IT MO20120100
(43) Date of publication of application: 23.10.2013
(73) Proprietor: SCM Group S.p.A., 47900 Rimini (IT)
(72) Inventor: Maioli, Fabio, 47822 Santarcangelo di Romagna (RN) (IT)
(74) Representative: Villanova, Massimo

(56) References cited:
- EP-A1- 1 878 525
- EP-A1- 1 990 114
- DE-A1- 4 033 785
- US-A- 1 988 102
- US-A- 2 067 652

## Description

### Background of the invention

The invention relates to a sawing unit as per the preamble of claim 1, in particular for machining wooden workpieces or workpieces made of a material that is similar to wood, and a (circular) saw apparatus comprising the aforesaid sawing unit.

Specifically, but not exclusively, the sawing unit and the corresponding saw apparatus can be usefully employed in a machine for sectioning panels.

In particular, reference is made to a sawing unit having a blade the height of which is variable, in particular for enabling the blade to disappear below the horizontal supporting plane of the workpiece during the return stroke along the cutting axis and/or for adjusting the protrusion of the blade above the supporting plane.

Circular saws for wood are already known that have a circular blade that can be raised and lowered and which is connected to a drive motor by a blade-height varying device, in such a manner as to prevent or limit the movements of great masses, in particular the mass of the drive motor.

DE 19532726 shows a circular saw with a carriage that is horizontally movable below the workpiece-holding table and a vertically movable blade-holding slide, in which a motor arranged on the carriage drives the blade by a continuous drive belt guided by a group of pulleys comprising a pulley that is coaxial to the drive shaft, a pulley that is coaxial to the blade shaft, a pulley mounted on the lower end of the blade-holding slide and two auxiliary pulleys arranged on the carriage on top of one another; the belt branches coming from the drive shaft are guided by the auxiliary pulleys arranged on the carriage; the belt branch that leaves the upper auxiliary pulley is guided on the pulley that is coaxial to the blade and the belt branch that leaves the lower auxiliary pulley is guided on the pulley mounted at the bottom on the slide.

EP 1815930 shows a circular saw for wood in which the protrusion of the saw, above the table on which the workpiece is supported, can be varied by a double rocker device, in which a lower rocker is connected to the drive shaft, an upper rocker is connected to the saw shaft and the two rockers are connected together on a movable axis.

EP 1990114 shows a circular saw carried by a vertically movable carriage on a base; the saw is driven, via a dual belt transmission, by a motor arranged on a rocker hinged on the carriage; the motor is supported by an arm hinged on one side to the rocker and on the other side to the base; simultaneously with the vertical movement of the carriage the motor performs a movement comprising about two linear movements.

EP 1992438 shows a circular saw with a blade of adjustable height arranged on an adjusting carriage that is movable with respect to the axis of the drive shaft, wherein a drive belt is guided around the drive shaft, around the blade shaft, around a first transmission pulley in a fixed position compared with the axis of the drive shaft and around a second transmission pulley that is movable together with the axis of the blade shaft to compensate for the variation of the distance between the drive shaft and the blade shaft.

### Each of patent publications US 2067652, DE 4033785 and US 1988102 discloses a saw unit as in the preamble of claim 1.

### Summary of the invention

One object of the invention is to make a sawing unit having a blade with a variable height.

One advantage is to permit a height-varying movement in which the blade moves in relation to the workpiece processing plane.

One advantage is to enable the height of the blade to be varied, limiting movements of great mass, in particular of the mass of the drive motor, in a vertical direction.

One advantage is to enable the height of the blade to be varied by varying the height of the motor slightly.

One advantage is to simplify the control of the height of the blade and to improve the quality and the precision of the workpieces machined by the saw unit.

One advantage is to provide a constructionally simple and cheap sawing unit.

One advantage is to rotate the blade by a motor of relatively large size without problems of interference with other elements.

One advantage is to make a sawing unit available that has a balanced anti-imbalance structure, in particular a structure the centre of gravity can be located on the lying plane of the linear guides along which the sawing unit sawing unit is movable below the machining plane with a cutting stroke and a return stroke.

One object of the invention is to provide a circular saw apparatus having the aforesaid sawing unit.

Such objects and advantages and still others are all achieved by the saw unit and apparatus according to one or more of the claims set out below.

In one example, a sawing unit comprises a movable support below a workpiece machining plane and an oscillating body that is carried by the support and in turn carries a rotating blade, a blade-driving motor and a system for transmitting motion from the motor to the blade; the oscillating body can oscillate in such a manner as to vary the height of the blade in relation to the machining plane.

### Brief description of the drawings

The invention can be better understood and implemented with reference to the attached drawings that illustrate one example by way of non-limiting example.
Figure 1 is a perspective view of a circular saw apparatus of known type.
Figure **2** is a perspective view of an example of a sawing unit according to the invention.
Figure 3 is a vertical raised side view of the sawing unit in figure 2.
Figure 4 is a view from the left of figure 3.
Figure 5 is a view as in figure 4 with the sawing unit in a different operating configuration.

### Detailed description

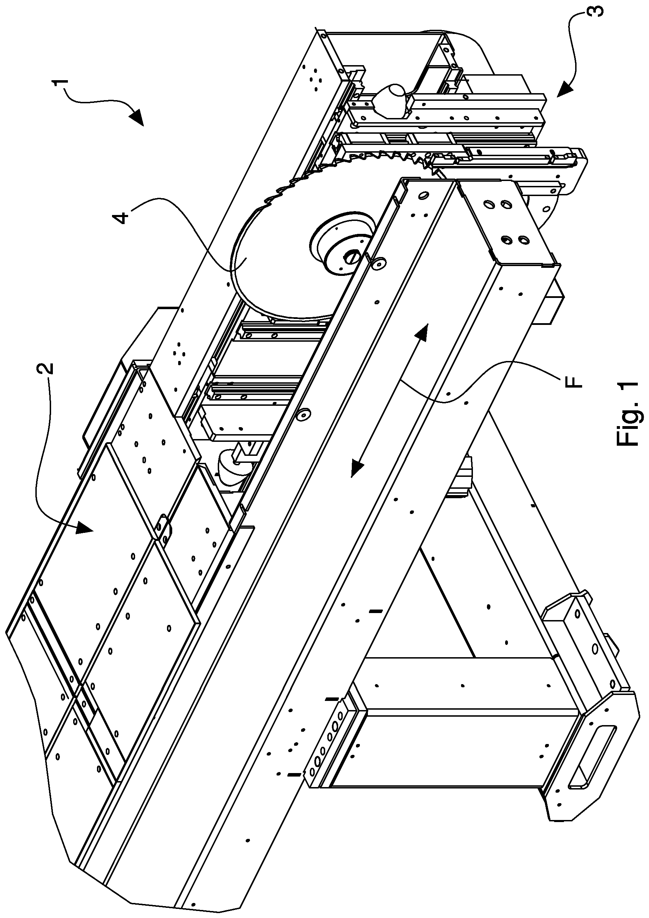

With reference to figure 1, with 1 a circular saw apparatus of known type has been indicated overall, for machining wooden workpieces or workpieces made of a material equivalent to wood. In particular, the saw apparatus can be used for cutting (sectioning) workpieces into panel shapes.

The saw apparatus comprises a supporting table 2 for supporting the workpiece and a sawing unit 3 that is movable below the supporting table. The sawing unit is movable in one direction F (both ways) that is substantially parallel to the (horizontal) plane defined by the supporting table 2. With the sawing unit 3 at least one circular blade 4 is operationally associated that can traverse the supporting table 2. The height of the blade 4 is variable in such a manner as to take the blade below the (horizontal) supporting plane of the workpiece defined by the table 2 in a position of disengagement from the workpiece (to permit the return stroke of the blade after the cutting stroke) and/or to vary the protrusion of the blade above the aforesaid supporting plane.

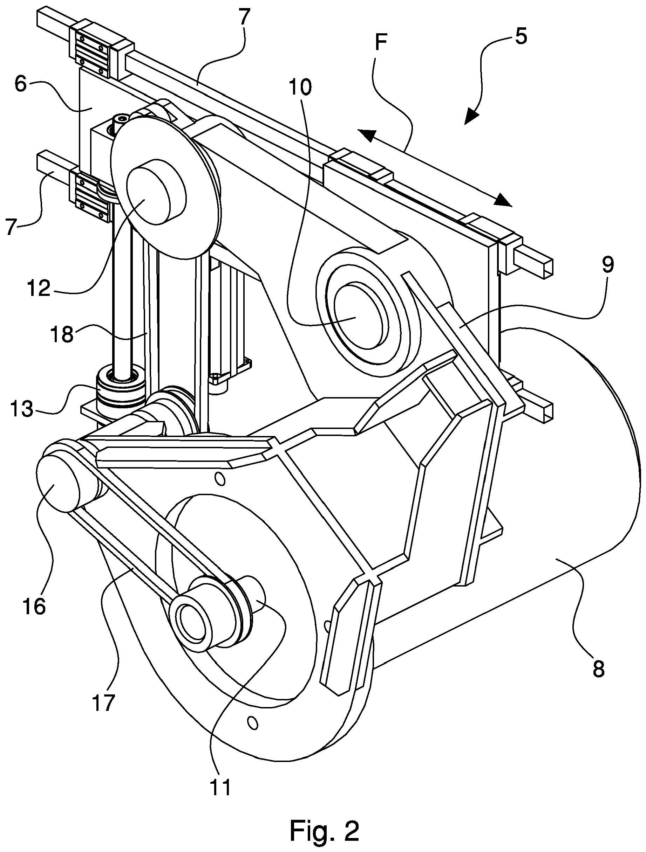

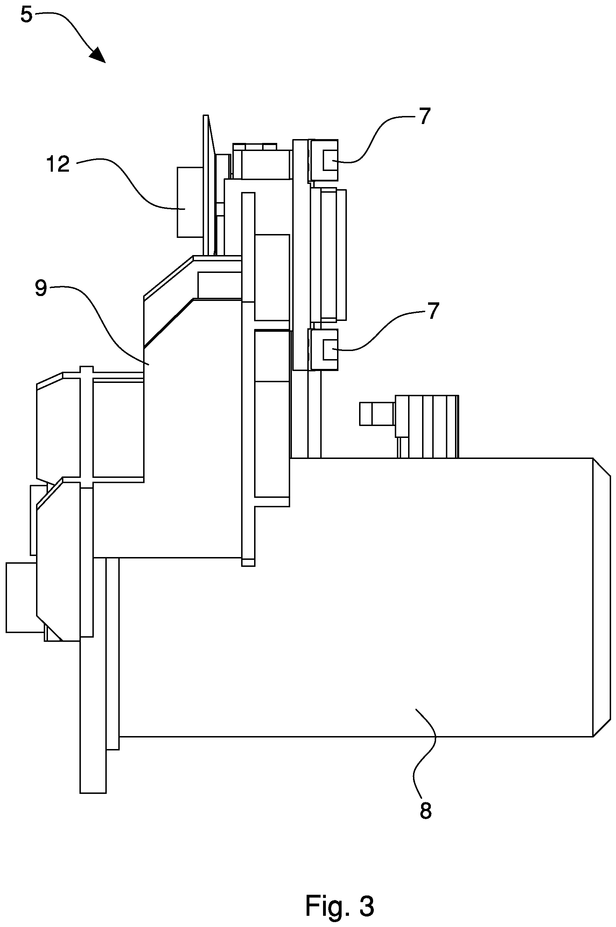

With reference to figures 2 to 5, an example of a sawing unit 5 made according to the present invention is now disclosed. The sawing unit 5 can be applied, for example, to the saw apparatus 1 of Figure 1 in replacement of the sawing unit 3 of known type. Thus also the sawing unit 5 will be movable below the supporting table 2 in the direction F (both ways). Also with the sawing unit 3 at least one circular blade 4 will be operationally associated that can traverse the supporting table 2 and the height of which is variable in such a manner as to vary the protrusion of the blade above the (horizontal) supporting plane of the workpiece defined by the table 2 and in such a manner as to take the blade below the table 2 in a disengagement position.

The sawing unit 5 according to the invention comprises a support 6 coupled with a frame of the saw apparatus 1. The support 6 will be movable on the frame at the command of the driving means. The support 6 may be, in particular, coupled with the frame with the possibility of sliding in the machining direction F parallel to the supporting table 2. The support 6 may be coupled with the frame of the saw apparatus 1 by (horizontal) linear sliding guides 7.

The sawing unit 5 comprises a motor 8 carried by an oscillating body 9 that is in turn supported by the support 6 with the possibility of oscillating, in particular rotating around an oscillation axis 10. The motor 8 will have a drive shaft 11 with a horizontal rotation axis (parallel to the oscillation axis 10).

The sawing unit 5 comprises a blade shaft 12 carried by the oscillating body 9. The blade shaft 12 (with a horizontal rotation axis and/or rotation axis parallel to the oscillation axis 10) is arranged for supporting a blade, in particular a circular blade, for example the rotating saw blade 4 in figure 1. With the blade shaft 12 the coupling means will be associated that are suitable for coupling the circular blade removably with the shaft 12.

The sawing unit 5 comprises transmission means for transmitting motion from the drive shaft 11 to the blade shaft 12. Such transmission means comprise flexible tensile means.

The oscillating body 9 is arranged for supporting the motor 8 with the drive shaft 11, the blade shaft 12 and the aforesaid motion transmission means. The oscillating body 9 is connected to the support 6 with the possibility of oscillating, with consequent oscillation of the elements carried by the oscillating body 9, such as, in particular, the motor 8, the blade shaft 12 and the motion transmission means. In the specific case the oscillating body 9 is rotatably coupled with the support 6 with the possibility of rotation around the oscillation axis 10 with a horizontal rotation axis.

The oscillating body 9 has the possibility of oscillating between two end positions (for example two positions defined by two stops of the drive means of the oscillating body) by performing an oscillating stroke (in particular limited both ways) during which the component in the vertical direction of the oscillation of the blade shaft 12 is greater than the component in a vertical direction of the oscillation that in a corresponding manner (i.e. together with the oscillation of the shaft 12), the motor 8 performs.

The blade shaft 12 and the motor 8 are, substantially, arranged on the oscillating body 9 in such a manner that, whilst the oscillating body 9 is commanded to perform oscillations along the oscillating stroke thereof, the blade shaft 12 consequently performs oscillations in a prevalently vertical direction, whilst the motor 8 performs oscillations in a prevalently horizontal direction or anyway with a component in a vertical direction that is much less than the vertical component of the blade shaft 12.

The drive shaft 11, during the oscillating stroke of the oscillating body 9, is always arranged below the oscillation axis 10 and/or the blade shaft 12.

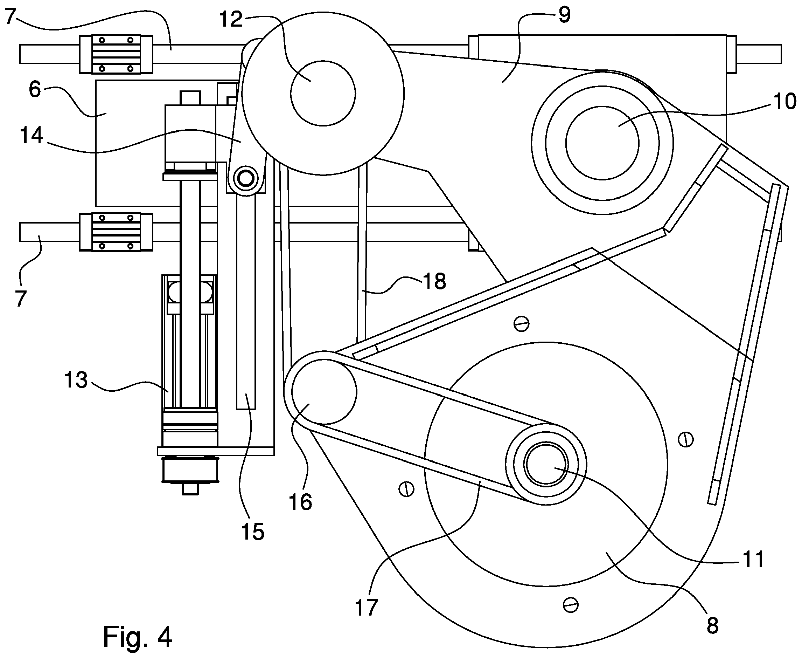

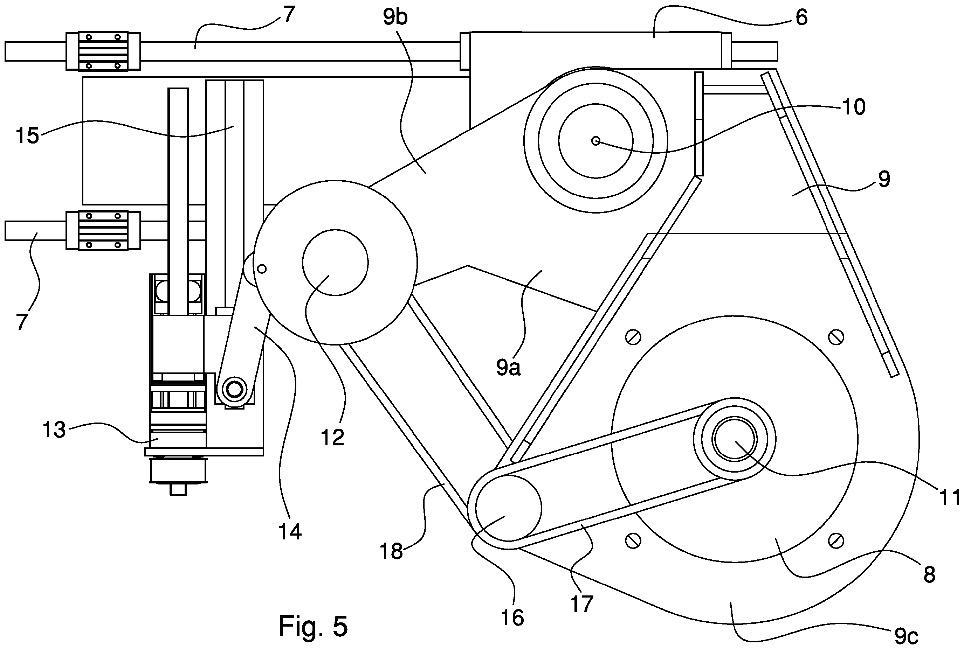

The blade shaft 12 may have, as in the specific case, a rotation axis arranged in such a manner that, during the oscillating stroke, this axis moves from an upper position (figure 4) to a lower position (figure 5) wherein it is arranged at a height that is, respectively, greater and less than the oscillation axis 10 (as visible in figures 4 and 5).

The oscillating body 9 may have, in particular, a central portion 9a, a side portion 9b and a lower portion 9c. The central portion 9a is traversed by the oscillation axis 10 of the body. The side portion 9b protrudes laterally from the central portion 9a and is traversed by the rotation axis of the blade shaft 12. The lower portion 9c protrudes downwards from the central portion 9a and is traversed by the rotation axis of the drive shaft 11.

The sawing unit 5 comprises driving means carried by the support 6 for commanding the oscillating body 9 to oscillate. In the specific case, this driving means comprises a linear actuator 13 (with a vertical axis) mounted on the support 6 and connected to the oscillating body 9 by a connecting rod 14. The linear actuator 13 may be driven electrically, pneumatically, hydraulically, etc. The driving means may further comprise a cursor that is integral with a movable element of the actuator 13. The cursor is slidably coupled with a linear guide 15 (with a guide axis that is parallel to the axis of the actuator 13). The connecting rod 14 will have an end articulated on the (linearly movable) cursor and an opposite end articulated on the oscillating body 9.

The transmission means comprise a transmission shaft 16 rotatably supported (with a horizontal rotation axis and/or parallel to the oscillation axis 10) by the oscillating body 9. The transmission shaft 16 is arranged, in particular, vertically below the blade shaft 12 at the upper position of the shaft (figure 4).

The transmission means comprise two endless flexible members in which a first flexible member 17 is wound around the drive shaft 11 and around a first end of the transmission shaft 16, and a second flexible member 18 is wound around a second end (opposite the first) of the transmission shaft 16 and around the blade shaft 12. The endless flexible members 17 and 18 may be, for example, two drive belts wound on two pairs of pulleys.

In use, the height of the blade 4 is varied by driving the actuator 13. Lifting the movable element of the actuator 13 will cause the blade 4 to lift up, vice versa for lowering. In particular, through the effect of the lifting of the actuator 13, the oscillating body 9 will oscillate in one direction (in the clockwise direction with reference to figures 4 and 5) such as to lift the blade shaft 12 and thus the blade 4 rotatably supported by the shaft 12, whilst the lowering of the actuator 13 will cause oscillation in the opposite direction (anticlockwise) and thus lowering of the blade 4. The motor 8 and the motion transmission means (the shaft 16, the flexible members 17 and 18 and the corresponding pulleys) will move together with the blade shaft 12, to form a group that is integral with the oscillating body 9.

It should be noted that the movement of the motor 8 in a vertical direction is minimal. This simplifies the height adjustment of the blade and further favours the stability and precision of the sawing unit. In particular, the position of the motor 8, located below the oscillation axis 10, enables the motor to perform movements in a mainly horizontal direction. It should be further noted that the distance of the drive shaft 11 from the oscillation axis is greater than the distance of the blade shaft 12 from the oscillation axis, so that the component in a vertical direction of the motor, is also for this reason, relatively reduced.

The motion transmission means has a flexible-member dual transmission with the use of an intermediate driven shaft and of a second endless flexible member, as in the case illustrated above.

## Claims

1. Saw unit (5) comprising:
- a support (6);
- an oscillating body (9) connected to said support (6) with the possibility of oscillating;
- a motor (8) carried by said oscillating body (9), said motor (8) having a motor shaft (11);
- a blade shaft (12) carried by said oscillating body (9), said blade shaft (12) being arranged for supporting a blade (4);
- transmission means (16, 17, 18) arranged for transmitting the motion from said motor shaft (11) to said blade shaft (12), said transmission means (16, 17, 18) being carried by said oscillating body (9);
wherein the oscillation of said oscillating body (9) entails the oscillation of said motor (8), blade shaft (12) and transmission means (16, 17, 18);
wherein said oscillating body (9) is constrained to oscillate around an oscillation axis (10) between at least two positions of an oscillation stroke during which the component in a vertical direction of the oscillation of said blade shaft (12) is greater than the component in a vertical direction of the oscillation of said motor (8);
and wherein, during said oscillation stroke, said motor shaft (11) is always arranged below said oscillation axis (10) and/or said blade shaft (12);
**characterized in that**
**said transmission means comprises a transmission shaft (16) that is rotatably supported by said oscillating body (9), a first endless flexible member (17) and a second endless flexible member (18), said first endless flexible member (17) being wound around said motor shaft (11) and around a first end of said transmission shaft (16), said second endless flexible member (18) being wound around a second end, opposite the first end, of said transmission shaft (16) and around said blade shaft** (12).

2. Saw unit according to claim **1**, wherein said blade shaft (12) has a rotation axis that, during said oscillation stroke, moves from an upper to a lower position wherein it is arranged at a height that is respectively higher and lower than said oscillation axis (10).

3. Saw unit according to any preceding claim, said oscillating body (9) having a central portion (9a) traversed by said oscillation axis (10), a lateral portion (9b) that protrudes laterally from said central portion (9a) and is traversed by said blade shaft (12), and a lower portion (9c) that protrudes downwards from said central portion (9a) and is traversed by said motor shaft (11).

4. Saw unit according to any preceding claim, comprising driving means (13) carried by said support (6) to command the oscillation of said oscillating body (9).

5. Saw unit according to claim **4,** wherein said driving means comprises a linear actuator (13) mounted on said support (6) and connected to said oscillating body (9) by at least one connecting rod (14).

6. Saw unit according to any preceding claim, wherein said motor shaft (11), said blade shaft (12) and said oscillation axis (10) are parallel to one another and in particular horizontal.

7. Saw apparatus comprising a table for supporting a workpiece and a saw unit that is movable below said supporting table, said saw unit having a circular blade that traverses said supporting table and is height-variable, **characterised in that** said saw unit is made according to any one of claims 1 to **6.**

## Patentansprüche

1. Sägeeinheit (5), aufweisend:
- einen Träger (6):
- einen oszillierenden Körper (9), der mit dem Träger (6) verbunden ist und die Möglichkeit hat, oszillieren zu können;
- einen Motor (8), der von dem oszillierenden Körper (9) getragen ist, wobei der Motor (8) eine Motorwelle (11) hat;
- eine Blattwelle (12), die von dem oszillierenden Körper (9) getragen ist, wobei die Blattwelle (12) angeordnet ist zum Tragen eines Blattes (4);
- eine Übertragungseinrichtung (16, 17, 18), die angeordnet ist zum Übertragen der Bewegung von der Motorwelle (11) an die Blattwelle (12), wobei die Übertragungseinrichtung (16, 17, 18) von dem oszillierenden Körper (9) getragen ist;
- wobei das Oszillieren des oszillierenden Körpers (9) das Oszillieren des Motors (8), der Blattwelle (12) und der Übertragungseinrichtung (16, 17, 18) zur Folge hat;
- wobei der oszillierende Körper (9) derart eingeschränkt ist, dass er um eine Oszillationsachse (10) zwischen wenigstens zwei Positionen einer Oszillationsauslenkung oszilliert, während der die Komponente in einer vertikalen Richtung der Oszillation der Blattwelle (12) größer ist als die Komponente in einer vertikalen Richtung der Oszillation des Motors (8);
und wobei während der Oszillationsauslenkung die Motorwelle (11) immer unterhalb der Oszillationsachse (10) und/oder der Blattwelle (12) angeordnet ist;
**dadurch gekennzeichnet, dass**
die Übertragungseinrichtung eine Übertragungswelle (16), die drehbar von dem oszillierenden Körper (9) getragen ist, ein erstes flexibles Endloselement (17) und ein zweites flexibles Endloselement (18) umfasst, wobei das erste flexible Endloselement (17) um die Motorwelle (11) und um ein erstes Ende der Übertragungswelle (16) gewunden ist, wobei das zweite flexible Endloselement (18) um ein zweites, dem ersten Ende gegenüberliegendes Ende der Übertragungswelle (16) und um die Blattwelle (12) gewunden ist.

2. Sägeeinheit nach Anspruch 1, wobei die Blattwelle (12) eine Rotationsachse hat, die sich während der Oszillationsauslenkung von einer oberen in eine untere Position beweget, wo sie in einer Höhe angeordnet ist, die höher bzw. niederer als die Oszillationsachse (10) ist.

3. Sägeeinheit nach einem vorstehenden Anspruch, wobei der oszillierende Körper (9) einen zentralen Abschnitt (9a) hat, der durch die Oszillationsachse (10) durchquert wird, einen seitlichen Abschnitt (9b), der seitlich von dem zentralen Abschnitt (9a) vorsteht und von der Blattwelle (12) durchquert wird, sowie einen unteren Abschnitt (9c), der von dem zentralen Abschnitt (9a) nach unten ragt und von der Motorwelle (11) durchquert wird.

4. Sägeeinheit nach einem vorstehenden Anspruch, umfassend ein Antriebsmittel (13), das von dem Träger (6) getragen wird, um die Oszillation des oszillierenden Körpers (9) zu gebieten.

5. Sägeeinheit nach Anspruch 4, wobei das Antriebsmittel einen Linearaktuator (13) umfasst, der an dem Träger (6) montiert und über wenigstens einen Verbindungsstage (14) mit dem oszillierenden Körper (9) verbunden ist.

6. Sägeeinheit nach einem vorstehenden Anspruch, wobei die Motorwelle (11), die Blattwellle (12) und die Oszillationsachse (10) parallel und insbesondere horizontal zueinander sind.

7. Sägeapparat aufweisend einen Tisch zum Tragen eines Werkstückes und eine Sägeeinheit, die unterhalb des Tragetisches bewegbar ist, wobei die Sägeeinheit ein kreisförmiges Blatt hat, welches den Tragetisch durchquert und höhenvariabel ist, **dadurch gekennzeichnet, dass** die Sägeeinheit gemäß einem der Ansprüche 1 bis 6 ausgebildet ist.

## Revendications

1. Unité de sciage (5) comprenant :
- un support (6) ;
- un corps oscillant (9) relié audit support (6) avec la possibilité d'osciller ;
- un moteur (8) porté par ledit corps oscillant (9), ledit moteur (8) ayant un arbre de moteur (11) ;
- un arbre de lame (12) porté par ledit corps oscillant (9), ledit arbre de lame (12) étant agencé pour supporter une lame (4) ;
- des moyens de transmission (16, 17, 18) agencés pour transmettre le mouvement dudit arbre de moteur (11) audit arbre de lame (12), lesdits moyens de transmission (16, 17, 18) étant portés par ledit corps oscillant (9) ;
dans laquelle l'oscillation dudit corps oscillant (9) entraîne l'oscillation desdits moteur (8), arbre de lame (12) et moyens de transmission (16, 17, 18) ;
dans laquelle ledit corps oscillant (9) est contraint d'osciller autour d'un axe d'oscillation (10) entre au moins deux positions d'une course d'oscillation pendant laquelle la composante dans une direction verticale de l'oscillation dudit arbre de lame (12) est plus grande que la composante dans une direction verticale de l'oscillation dudit moteur (8) ;
et dans laquelle, pendant ladite course d'oscillation, ledit arbre de moteur (11) est toujours agencé sous ledit axe d'oscillation (10) et/ou ledit arbre de lame (12) ;
**caractérisée en ce que**
lesdits moyens de transmission comprennent un arbre de transmission (16) qui est supporté à rotation par ledit corps oscillant (9), un premier organe souple sans fin (17) et un second organe souple sans fin (18), ledit premier organe souple sans fin (17) étant enroulé autour dudit arbre de moteur (11) et autour d'une première extrémité dudit arbre de transmission (16), ledit second organe souple sans fin (18) étant enroulé autour d'une seconde extrémité, opposée à la première extrémité, dudit arbre de transmission (16) et autour dudit arbre de lame (12).

2. Unité de sciage selon la revendication 1, dans laquelle ledit arbre de lame (12) a un axe de rotation qui, pendant ladite course d'oscillation, se déplace d'une position supérieure à une position inférieure lorsqu'il est agencé à une hauteur qui est respectivement plus haute et plus basse que ledit axe d'oscillation (10) .

3. Unité de sciage selon l'une quelconque des revendications précédentes, ledit corps oscillant (9) ayant une partie centrale (9a) traversée par ledit axe d'oscillation (10), une partie latérale (9b) qui fait latéralement saillie de ladite partie centrale (9a) et est traversée par ledit arbre de lame (12), et une partie inférieure (9c) qui fait saillie de ladite partie centrale (9a) vers le bas et est traversée par ledit arbre de moteur (11).

4. Unité de sciage selon l'une quelconque des revendications précédentes, comprenant des moyens d'entraînement (13) portés par ledit support (6) pour commander l'oscillation dudit corps oscillant (9).

5. Unité de sciage selon la revendication 4, dans laquelle lesdits moyens d'entraînement comprennent un actionneur linéaire (13) monté sur ledit support (6) et relié audit corps oscillant (9) par au moins une bielle (14).

6. Unité de sciage selon l'une quelconque des revendications précédentes, dans laquelle ledit arbre de moteur (11), ledit arbre de lame (12) et ledit axe d'oscillation (10) sont parallèles les uns aux autres et en particulier horizontaux.

7. Appareil à scie comprenant une table pour supporter une pièce et une unité de sciage qui est mobile sous ladite table de support, ladite unité de sciage ayant une lame circulaire qui traverse ladite table de support et est variable en hauteur, **caractérisé en ce que** ladite unité de sciage est fabriquée selon l'une quelconque des revendications 1 à 6.
